# EUROPÄISCHE PATENTSCHRIFT

(11) **EP 1 438 244 B1**
(45) Veröffentlichungstag und Bekanntmachung des Hinweises auf die Patenterteilung: **03.08.2005**
(21) Anmeldenummer: 02782999.3
(22) Anmeldetag: 24.10.2002
(51) Int. Cl.: B65G 33/02

(54) **SCHNECKENFÖRDERER ZUM TRANSPORT VON AN HÄNGETRÄGERN HÄNGENDEM FÖRDERGUT**
SCREW CONVEYOR FOR THE TRANSPORT OF GOODS HANGING FROM HANGER SUPPORTS
TRANSPORTEUR HELICOIDAL POUR ACHEMINER DES ARTICLES SUSPENDUS A DES SUPPORTS DE SUSPENSION

(30) Priorität: 26.10.2001 DE 10152926
(43) Veröffentlichungstag der Anmeldung: 21.07.2004
(73) Patentinhaber: WF Logistik GmbH, 86899 Landsberg (DE)
(72) Erfinder: BEYER, Rolf, 86842 Türkheim (DE)
(74) Vertreter: Tiesmeyer, Johannes, Dr.
(86) Internationale Anmeldenummer: PCT/EP2002/011912
(87) Internationale Veröffentlichungsnummer: WO 2003/037758

(56) Entgegenhaltungen:
- EP-A- 0 346 991
- EP-A- 0 403 869
- DE-A- 19 614 009
- DE-C- 4 326 024
- DE-U- 8 228 473
- FR-A- 2 614 281
- PATENT ABSTRACTS OF JAPAN vol. 012, no. 105 (M-681), 6. April 1988 (1988-04-06) & JP 62 235120 A (HITACHI LTD;OTHERS: 01), 15. Oktober 1987 (1987-10-15)

## Beschreibung

Die Erfindung betrifft einen Schneckenförderer zum Transport von an Hängeträgern hängendem Fördergut.

Schneckenträger werden beispielsweise zum Transport von an Kleiderbügeln aufgehängten Kleidungsstücken eingesetzt, etwa im Rahmen einer Hängeförderanlage zur Sortierung und Kommissionierung von Kleidungsstücken. In dem Schneckenförderer werden die Kleiderbügel dabei mit ihren oberen Bügelhaken in den oder die von einem System von Fördernuten gebildeten Schneckengänge einer Schneckenwelle eingehängt. Wird die Schneckenwelle um ihre Wellenachse rotatorisch angetrieben, so werden die in dem Fördernutsystem geführten Kleiderbügel in Richtung der Wellenachse fortbewegt.

Oftmals werden die Kleiderbügel nicht säuberlich voneinander getrennt auf den Schneckenförderer aufgegeben, sondern in mehr oder weniger ungeordneten Schüben gehäufter Kleiderbügel. Dabei kommt es nicht selten zu einer Überkreuzung zweier (oder auch mehrerer) Kleiderbügel, d.h. ein Kleiderbügel, der - bezogen auf die Förderrichtung der Kleidungsstücke - mit seinem Bügelhaken vor einem anderen Kleiderbügel in das Fördernutsystem der Schneckenwelle eingehängt ist, gelangt mit seiner Bügelstange hinter die Bügelstange dieses nachfolgend geführten anderen Kleiderbügels, so dass die beiden Kleiderbügel an ihren Bügelhälsen überkreuz liegen.

Um die Kleiderbügel einzeln von dem Schneckenförderer ausgeben zu können, beispielsweise auf Einzelbügelträger, müssen überkreuzte Kleiderbügel zuvor entfädelt werden. Es sind Gestaltungen des Fördernutsystems der Schneckenwelle bekannt, die es ermöglichen, solche überkreuzten Kleiderbügel auf ihrem Weg durch den Schneckenförderer ohne manuellen oder maschinellen Eingriff von außen zu entfädeln. Dabei werden die überkreuzten Kleiderbügel in dem Fördernutsystem mit ihren Bügelhaken aneinander herangeführt, bis schließlich einer der Kleiderbügel von dem anderen ausgehoben und über diesen hinweggehoben wird und die Überkreuzung so gelöst wird. Im praktischen Einsatz hat sich jedoch gezeigt, dass hierdurch nicht immer alle Überkreuzungen von Kleiderbügeln zuverlässig beseitigt werden können. Um dennoch zu gewährleisten, dass die Kleiderbügel einzeln und überkreuzungsfrei den Schneckenförderer verlassen können, müsste dann eine Bedienungsperson damit beauftragt werden, die Abläufe im Schneckenförderer fortlaufend zu beobachten und einzugreifen, falls sie noch verbleibende Überkreuzungen von Kleiderbügeln feststellt. Dies ist freilich personalaufwendig und steht dem allgemeinen Wunsch nach weitestgehender Automatisierung der Förderprozesse entgegen.

Aufgabe der Erfindung ist es daher, einen Schneckenförderer so auszugestalten, dass er eine automatisierte Erkennung überkreuzter Kleiderbügel oder anderer zum Förderguttransport verwendeter Hängeträger erlaubt.

Bei der Lösung dieser Aufgabe geht die Erfindung aus von einem Schneckenförderer zum Transport von an Hängeträgern hängendem Fördergut, insbesondere an Kleiderbügeln aufgehängten Kleidungsstücken, umfassend einen um seine Wellenachse drehbaren Schneckenwellenstrang mit einem in die Außenoberfläche des Schneckenwellenstrangs eingearbeiteten, sich entlang der Wellenachse schneckenartig um diese windenden Fördernutsystem, in das die Hängeträger mit Traghaken einhängbar und darin durch Drehung des Schneckenwellenstrangs axial förderbar sind.

Erfindungsgemäß wird für einen solchen Schneckenförderer vorgeschlagen, dass das Fördernutsystem mindestens eine primäre Fördernut aufweist, von der an einer Abzweigungsstelle eine - bezogen auf die Förderrichtung des Förderguts entlang der Wellenachse - der primären Fördernut vorauslaufende sekundäre Fördernut abzweigt, wobei die Gestaltung der primären Fördernut und der sekundären Fördernut, insbesondere hinsichtlich ihres Steigungsprofils, derart abgestimmt ist, dass überkreuzungsfreie Hängeträger, die sich in der primären Fördernut der Abzweigungsstelle nähern, die Abzeigungsstelle ohne Verlassen der primären Fördernut passieren, und dass zur Erkennung überkreuzter Hängeträger dem Schneckenwellenstrang eine Sensoranordnung zugeordnet ist, welche dazu ausgebildet ist, zumindest die sekundäre Fördernut auf darin geförderte Hängeträger zu überwachen.

Die Erfindung macht sich die Gegebenheit zunutze, dass bei überkreuzten Hängeträgern, die - ggf. nachdem sie einen vorgeschalteten Vereinzelungsabschnitt durchlaufen haben - in verschiedenen Windungen des Fördernutsystems des Schneckenwellenstrangs geführt werden, Zugkräfte an den Traghaken dieser Hängeträger auftreten, die versuchen, die Traghaken zueinander hinzuziehen. Dieser Effekt, der der Neigung der Hängeträger gleichkommt, ihre überkreuzungsbedingte Schräglage auszugleichen, wird allein schon durch das Eigengewicht der Hängeträger hervorgerufen, wird jedoch durch das Gewicht der an den Hängeträgern hängenden Gegenstände wesentlich verstärkt. Bei zwei überkreuzten Hängeträgern wirkt demnach auf den Traghaken des in Förderrichtung vorauslaufenden Hängeträgers eine nach axial hinten gerichtete Zugkraft, während auf den Traghaken des nachlaufenden Hängeträgers eine nach axial vorne gerichtete Zugkraft wirkt. Dies führt dazu, dass der vorauslaufende Hängeträger (ebenso wie alle übrigen, überkreuzungsfreien Hängeträger) an der Abzweigungsstelle die primäre Fördernut nicht verlässt, der nachlaufende Hängeträger jedoch aufgrund der ihn nach axial vorne treibenden Zugkraft an der Abzweigungsstelle von der primären Fördernut in die sekundäre Fördernut einbiegt. Das Einlaufen eines Hängeträgers in die sekundäre Fördernut ist folglich ein zuverlässiges Indiz für das Vorhandensein überkreuzter Hängeträger. Die Sensoranordnung erlaubt es bei der erfindungsgemäßen Lösung, ein solches Ereignis automatisch und somit personalsparend zu detektieren.

Die Sensoranordnung kann einen ersten Sensor zur Überwachung der sekundären Fördernut sowie einen dem ersten Sensor in Förderrichtung vorausliegend angeordneten zweiten Sensor zur Überwachung der primären Fördernut auf darin geförderte Hängeträger umfassen, wobei eine mit beiden Sensoren verbundene Auswerteeinheit ein Überkreuzungserkennungssignal abgibt, wenn beide Sensoren in einem vorgegebenen zeitlichen Zusammenhang zueinander, insbesondere gleichzeitig, einen Hängeträger in der jeweiligen Fördernut detektieren.

Zweckmäßigerweise wird die sekundäre Fördernut im Abstand von der Abzweigungsstelle wieder in die primäre Fördernut einmünden. Im praktischen Einsatz hat es sich als günstig erwiesen, wenn sich die sekundäre Fördernut zwischen ihrer Abzweigungsstelle von der primären Fördernut und ihrer Einmündungsstelle in die primäre Fördernut annähernd über eine volle Windung erstreckt.

Zur Kapazitätserhöhung des Schneckenförderers kann das Fördernutsystem eine Mehrzahl von mindestens zwei sich nebeneinander um die Wellenachse windenden primären Fördernuten aufweisen. Vorzugsweise wird dann von jeder dieser primären Fördernuten eine sekundäre Fördernut abzweigen, wobei die Sensoranordnung dazu ausgebildet sein wird, jede der sekundären Fördernuten auf darin geförderte Hängeträger zu überwachen. Eine der primären Fördernuten kann dabei vor den Abzweigungsstellen der sekundären Fördernuten, beispielsweise in einem Vereinzelungsabschnitt, zwischen zwei aufeinander folgenden Windungen einer anderen primären Fördernut entspringen. Auf diese Weise kann der Schneckenförderer dort, wo die betreffende primäre Fördernut entspringt, vor Überlauf geschützt werden.

Bei metallischen Hängeträgern empfiehlt es sich aus Kostengründen und aufgrund der einfachen Arbeitsweise, eine induktive Sensoranordnung zu verwenden. Es ist freilich nicht ausgeschlossen, auf Sensoranordnungen zurückzugreifen, die nach anderen Prinzipien arbeiten, beispielsweise auf eine optische Sensoranordnung.

Ein Ausführungsbeispiel der Erfindung wird nachfolgend anhand der beigefügten Zeichnungen näher erläutert. Es stellen dar:
- Fig. 1: eine stark schematische Gesamtansicht eines erfindungsgemäßen Schneckenförderers,
- Fig. 2: in vergrößerter Perspektivansicht ein Wellenstück des Schneckenwellenstrangs des Schneckenförderers der Fig. 1,
- Fig. 3: das Wellenstück der Fig. 2 in einer anderen Drehstellung,
- Fig. 4: das Wellenstück der Fig. 2 in nochmals veränderter Drehstellung und
- Fig. 5: schematisch eine Abwicklung der in das Wellenstück der Figuren 2 bis 4 eingearbeiteten Fördernuten.

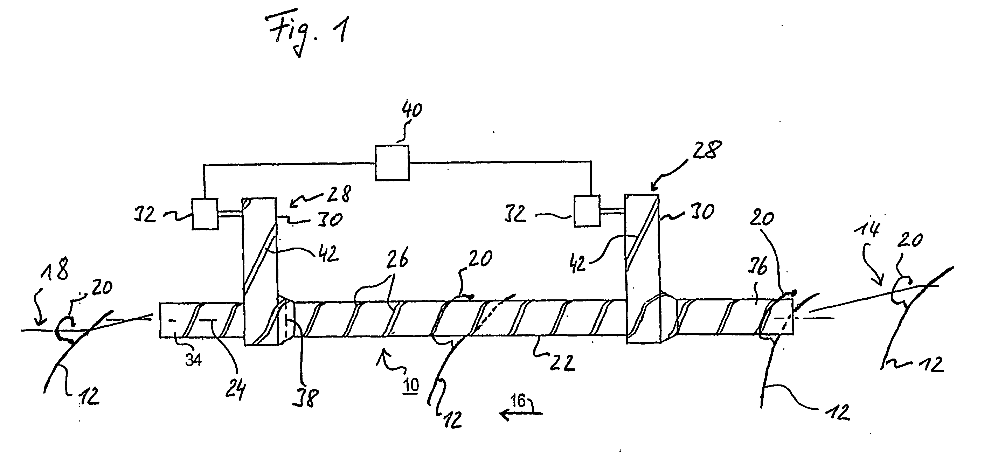

Der in Fig. 1 gezeigte und dort allgemein mit 10 bezeichnete Schneckenförderer dient zum Transport von Hängeträgern 12, welche in einem Eingabebereich 14 angeliefert und auf den Schneckenförderer 10 übergeben werden und nach Transport entlang einer Förderrichtung 16 in einem Ausgabebereich 18 von dem Schneckenförderer 10 ausgegeben werden. Bei den Hängeträgern 12 handelt es sich im vorliegenden Beispielfall um Kleiderbügel, die jeweils einen Bügelhaken 20 aufweisen und mit nicht näher dargestellten Kleidungsstücken behängt sind. Es versteht sich, dass der Schneckenförderer 10 grundsätzlich auch zum Transport beliebiger anderer Hängeträger statt solcher Kleiderbügel dienen kann. Vorzugsweise wird der Schneckenförderer dazu eingesetzt, die Kleiderbügel 12 in dem Eingabebereich 14 von einem vorgeschalteten Transportsystem, beispielsweise einem Klinkenförderer, zu übernehmen und sie in dem Ausgabebereich 18 an ein nachgeschaltetes Transportsystem, beispielsweiseeine Hängefördereinrichtung mit auf Rollen verfahrbaren Einzelbügelträgern, zu übergeben. Zum An- und Abtransport der Kleiderbügel 12 können selbstverständlich auch andere Transportsysteme als die vorgenannten verwendet werden, beispielsweise eine Hängefördereinrichtung mit auf Rollen verfahrbaren Mehrfachbügelträgern, die häufig als Trolleys bezeichnet werden und eine Tragstange aufweisen, an der mehrere Kleiderbügel 12 eingehängt werden können.

Der Schneckenförderer weist einen Schneckenwellenstrang 22 auf, der mit seiner Wellenachse 24 parallel zur Förderrichtung 16 angeordnet ist und um diese Achse 24 drehbar gelagert ist. In den Umfangsmantel des Schneckenwellenstrangs 22 ist ein sich entlang der Wellenachse 24 um diese windendes Fördernutsystem 26 eingearbeitet, in welches die auf den Schneckenförderer 10 aufgegebenen Kleiderbügel 12 mit ihren oberen Bügelhaken 20 einhängbar sind. Das Fördernutsystem 26 bildet eine der Führung der Kleiderbügel 12 dienende Anordnung von Schneckengängen. Wird der Schneckenwellenstrang 22 in Rotation um seine Wellenachse 24 versetzt, so werden die daran hängenden Kleiderbügel 12 in Achsrichtung fortbewegt. In der schematischen Zeichnung der Fig. 1 ist das Fördernutsystem 26 so dargestellt, als ob es lediglich einen einzigen Schneckengang bilden würde, der sich mit gleichbleibender Steigung über die gesamte Länge des Schneckenwellenstrangs 22 erstreckt. Diese Darstellungsweise dient jedoch lediglich der Vereinfachung; es versteht sich, dass das Fördernutsystem 26 zumindest abschnittsweise mehrere nebeneinander laufende Schneckengänge bilden kann und das die Steigung jedes Schneckengangs entlang der Wellenachse 24 veränderlich sein kann. Durch Variation der Gangsteigung oder/und der Anzahl der Schneckengänge können verschiedene Effekte erreicht werden. Beispielsweise können die Kleiderbügel 12 vereinzelt werden, indem die Windungen eines Schneckengangs so weit verengt werden, dass in jeder Windung nur ein einziger Kleiderbügel aufgenommen werden kann. Die Gangsteigung wird dabei so reduziert, dass sie etwa gleich oder sogar etwas kleiner als die Drahtstärke der Bügelhaken 20 ist. Anschließend können die Windungen wieder allmählich auseinander gezogen werden, also die Steigung des Schneckengangs nach und nach wieder vergrößert werden. Eine Erhöhung der Zahl der Schneckengänge, beispielsweise eine Verdopplung von einem auf zwei Schneckengänge, ermöglicht es beispielsweise, die Anzahl der transportierbaren Kleiderbügel 12 zu verdoppeln. Wird an kritischen Stellen entlang des Schneckenwellenstrangs 22 ein solcher zusätzlicher Schneckengang eingebaut, kann verhindert werden, dass der Schneckenförderer 10 "überläuft".

Zum Drehantrieb des Schneckenwellenstrangs 22 dient eine allgemein mit 28 bezeichnete Drehantriebseinrichtung. Diese Drehantriebseinrichtung 28 weist mindestens einen vorzugsweise in axialem Abstand von den Längsenden des Schneckenwellenstrangs 22 angeordneten flexiblen Antriebsriemen 30 auf, welcher den Schneckenwellenstrang 22 auf einem Teilumfang von dessen Umfangsmantel antriebskraftübertragend, beispielsweise mittels ineinandergreifender Verzahnungen, umschlingt und mittels eines elektrischen Antriebsmotors 32 zum Umlauf in einer endlosen Schleife angetrieben wird. Im vorliegenden Beispielfall der Fig. 1 sind zwei solcher Antriebsriemen 30 gezeigt. Die beiden Antriebsriemen 30 treiben unabhängig voneinander je eines von zwei zueinander koaxialen Strangsegmenten 34, 36 des Schneckenwellenstrangs 22 an, die an einer gestrichelt angedeuteten Trennstelle 38 voneinander getrennt sind und unabhängig voneinander um die Wellenachse 24 drehbar sind. Eine elektronische Steuereinheit 40 erlaubt eine voneinander unabhängige, insbesondere drehzahlveränderliche Steuerung der Antriebsmotoren 32. Selbstverständlich kann der Schneckenwellenstrang 22 auch von einer durchgehenden, nichtsegmentierten Schneckenwelle gebildet sein.

Jeder Antriebsriemen 30 weist auf seiner schleifenäußeren Seite eine Anordnung zueinander paralleler Rillen 42 auf, die sich über die Gesamtbreite des betreffenden Antriebsriemens 30 erstrecken und schräg zu dessen Umlaufrichtung verlaufen. Diese Rillen 42 sind so ausgebildet und zu dem Fördernutsystem 26 des Schneckenwellenstrangs 22 ausgerichtet, dass Kleiderbügel 12, die sich einem der Antriebsriemen 30 nähern, aus dem Fördernutsystem 26 unmittelbar in eine der Rillen 42 einlaufen können und sich nach Überqueren des betreffenden Antriebsriemens 30 wieder in das Fördernutsystem 26 des Schneckenwellenstrangs 22 einfädeln können. Auf diese Weise können die Kleiderbügel 12 auf ihrem Weg durch den Schneckenförderer 10 sicher und geführt über sämtliche Antriebsriemen 30 axial hinwegbewegt werden.

Bei einer bevorzugten Einsatzform des Schneckenförderers 10 können die Kleiderbügel 12 in ungeordneten Haufen zu jeweils mehreren auf den Schneckenförderer 10 aufgegeben werden, wobei dem Schneckenförderer 10 die Aufgabe zukommt, die Kleiderbügel 12 zu fördern, zu vereinzeln, zu entflechten, zu takten und zu zählen, so dass sie einzeln nacheinander den Schneckenförderer 10 verlassen. Hierzu ist ein an den Eingabebereich 14 anschließender erster Abschnitt des Schneckenwellenstrangs 22 zweckmäßigerweise als Stauförderer ausgebildet, der mit Hilfe eines in Fig. 1 nicht näher dargestellten, schaltbaren Stoppanschlags eine Aufstauung der auf den Schneckenwellenstrang 22 aufgegebenen Kleiderbügel erlaubt. Auf diesen Stauabschnitt können ein Vereinzelungsabschnitt und ein Entflechtungsabschnitt folgen, die allein durch entsprechende Gestaltung des Fördernutsystems 26 eine Vereinzelung der Kleiderbügel 12 sowie eine wenigstens teilweise Entflechtung überkreuzter Kleiderbügel 12 herbeiführen. Solche Vereinzelungs- und Entflechtungsabschnitte sind bei Schneckenförderern an sich bekannt. Bei schubweiser Aufgabe der Kleiderbügel 12 auf den Schneckenförderer 10 und anschließender Aufstauung derselben kann es allerdings vorkommen, dass sich die Kleiderbügel 12 so ineinander verhängen, dass in dem Entflechtungsabschnitt des Schneckenwellenstrangs 22 nur ein Teil der Überkreuzungen der Kleiderbügel 12 gelöst wird und nach dem Entflechtungsabschnitt weiterhin einige Kleiderbügel 12 überkreuzt sind. Da die Ausgabe überkreuzter Kleiderbügel 12 vom Schneckenförderer 10 die anschließenden Transportprozesse maßgeblich stören kann, ist der Schneckenwellenstrang 22 vor seinem ausgabeseitigen Ende, jedoch nach seinem Entflechtungsabschnitt mit einem Überkreuzungserkennungsabschnitt ausgeführt, in dem etwaige verbliebene Überkreuzungen von Kleiderbügeln 12 erkannt werden können.

Der angesprochene Überkreuzungserkennungsabschnitt ist bevorzugt an dem Strangsegment 34 des Schneckenwellenstrangs 22 ausgebildet. Die zuvor angesprochenen Vereinzelungs- und Entflechtungsabschnitte können ebenfalls an dem Strangsegment 34 ausgebildet sein. Das andere Strangsegment 36 kann dagegen zumindest überwiegend der Aufstauung der auf den Schneckenförderer aufgegebenen Kleiderbügel dienen.

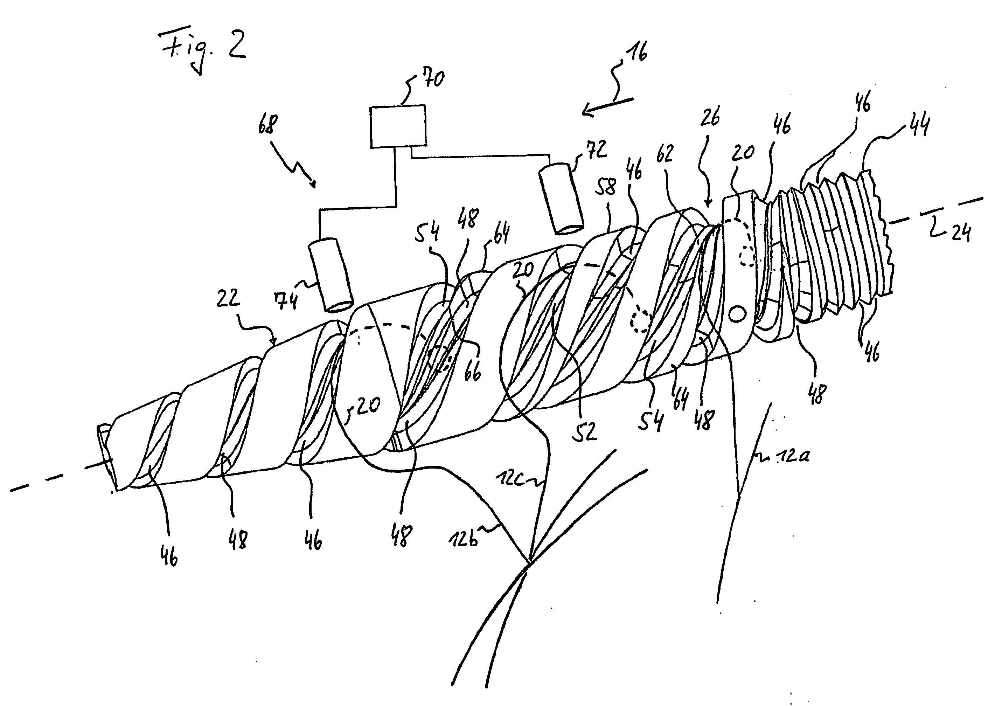

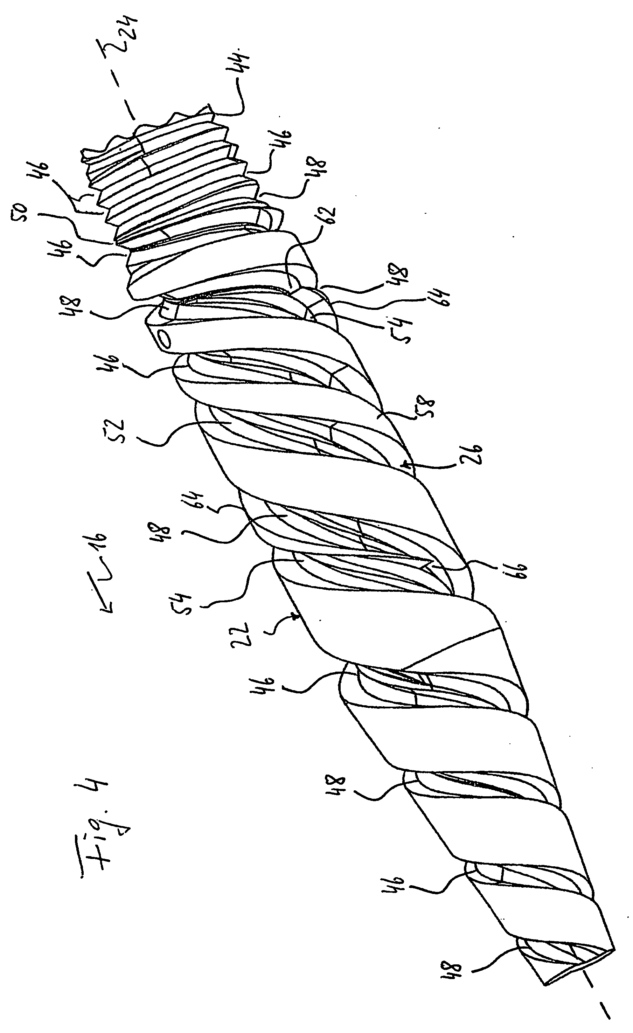

Zur Erläuterung des Überkreuzungserkennungsabschnitts des Schneckenwellenstrangs 22 wird nun auf die Figuren 2 bis 4 verwiesen. In diesen Figuren ist ein Wellenstück 44 gezeigt, das mit seinem in den Figuren linken Ende das ausgabeseitige Ende des Schneckenwellenstrangs 22 bildet. Das Fördernutsystem 26 des Schneckenwellenstrangs 22 weist auf diesem Wellenstück 44 zwei ineinander verschlungene, also sich nebeneinander um die Wellenachse 24 windende primäre Fördernuten 46, 48 auf, die nachfolgend als Hauptnuten bezeichnet werden. Um den Verlauf der beiden Hauptnuten 46, 48 anschaulich zu machen, sind die zugehörigen Bezugszeichen vielfach in den Figuren 2 bis 4 eingetragen. Die Hauptnut 48 entspringt, wie insbesondere in Fig. 4 zu erkennen ist, zwischen zwei aufeinander folgenden Windungen der Hauptnut 46. Der annähernde Ort des Entspringens der Hauptnut 48 ist in Fig. 4 mit 50 bezeichnet.

In der Hauptnut 46 werden die Kleiderbügel 12 auf das Wellenstück 44 gefördert. Selbst nach Durchlaufen der erwähnten Vereinzelungs- und Entflechtungsabschnitte des Schneckenwellenstrangs 22 kann nicht ausgeschlossen werden, dass die Kleiderbügel 12 bei Erreichen des Wellenstücks 44 zum Teil immer noch gehäuft auftreten, anstatt sauber voneinander separiert in je einer Nutwindung gefördert zu werden. Die zusätzlich eingefügte Hauptnut 48 hat hier den Zweck, jedem angelieferten Kleiderbügel 12 eine eigene Nutwindung zuzuweisen und so ein Überlaufen der Hauptnut 46 zu verhindern. Hierzu ist der Nutquerschnitt der Hauptnut 46 im Bereich vor dem Ursprungsort 50 der Hauptnut 48 so gestaltet, dass in jeder Nutwindung der Hauptnut 46 jeweils nur Platz für einen einzigen Kleiderbügel 12 besteht. Zudem folgen die Windungen der Hauptnut 46 in dem Bereich vor dem Ursprungsort 50 der Hauptnut 48 eng aufeinander. Durch diese Gestaltung der Hauptnut 46 werden etwaige überzählige Kleiderbügel 12 (überzählig meint hier diejenigen Kleiderbügel 12, die die Förderkapazität der Hauptnut 46 übersteigen und für die die Hauptnut 46 dementsprechend keine Windung zu ihrem Transport zur Verfügung stellen kann) nach außen herausgedrückt, so dass sie etwa über der Trennrippe zwischen zwei aufeinander folgenden Windungen der Hauptnut 46 liegen. Gelangen diese überzähligen Kleiderbügel 12 dann in den Bereich des Ursprungsorts 50 der Hauptnut 48, so fallen sie unweigerlich in die Hauptnut 48 hinein und werden darin zum ausgabeseitigen Ende des Wellenstücks 44 weitertransportiert.

Für den vorstehend erläuterten Gedanken, zwischen zwei aufeinander folgenden Windungen einer ersten Hauptnut eine zweite Hauptnut entspringen zu lassen, wird im Übrigen unabhängig von der Erkennung überkreuzter Kleiderbügel die Formulierung selbständigen Schutzes vorbehalten.

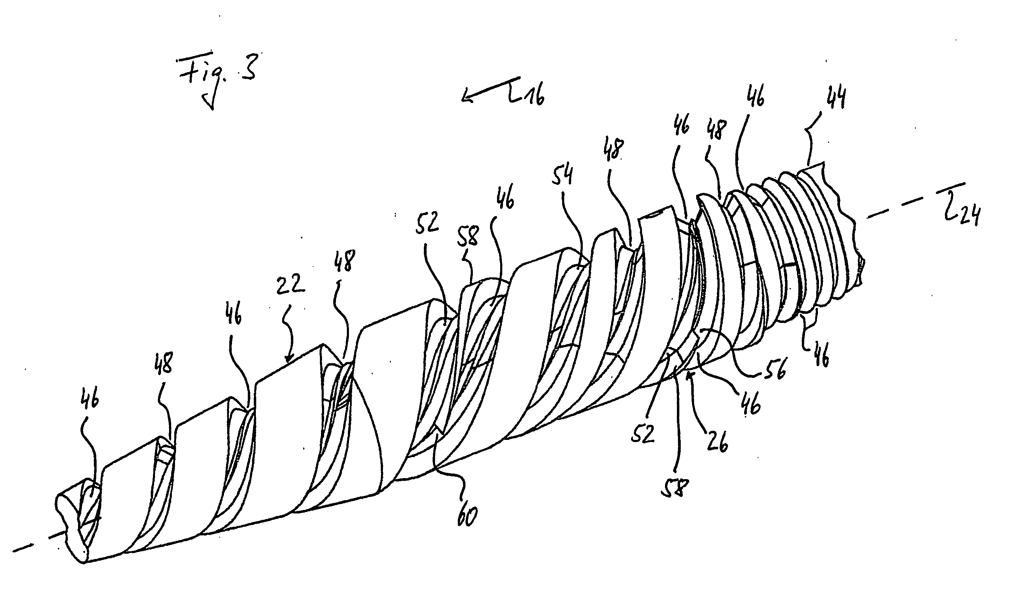

Nach dem Ursprungsort 50 der Hauptnut 48 zweigt von jeder der beiden Hauptnuten 46, 48 eine nachfolgend als Bypassnut bezeichnete sekundäre Fördernut 52 bzw. 54 ab, die nach etwa einer vollen Windung wieder in die zugehörige Hauptnut einläuft. Die Abzweigungsstelle, an der die Bypassnut 52 von der Hauptnut 46 abzweigt, ist in Fig. 3 zu erkennen und dort mit 56 bezeichnet. An dieser Abzweigungsstelle 56 beginnt eine die Hauptnut 46 von der Bypassnut 52 trennende Rippe 58, die sich um die Wellenachse 24 windend bis zu einer Einmündungsstelle 60 verläuft, an der die Bypassnut 52 wieder in die Hauptnut 46 einläuft. Diejenige Stelle, an der die Bypassnut 54 von der Hauptnut 48 abzweigt, ist in den Figuren 2 und 4 erkennbar und dort mit 62 bezeichnet. An dieser Abzweigungsstelle 62 beginnt in entsprechender Weise eine die Hauptnut 48 von der Bypassnut 54 trennende Rippe 64, welche sich um die Wellenachse 24 windend bis zu einer Einmündungsstelle 66 verläuft, an der die Bypassnut 54 wieder in die Hauptnut 48 einläuft.

Deutlich zu erkennen ist in den Figuren 2 bis 4, dass die Bypassnuten 52, 54 in Förderrichtung 16 nach vorne von ihrer zugehörigen Hauptnut 46 bzw. 48 abzweigen, dieser also in Förderrichtung 16 vorauslaufen. Dabei sind die Hauptnut 46 und die Bypassnut 52 im Bereich ihrer Verzweigungsstelle 56 sowie die Hauptnut 48 und die Bypassnut 54 im Bereich ihrer Verzweigungsstelle 62 im Hinblick auf ihre Nutsteigung und ggf. auch ihren Nutquerschnitt so gestaltet, dass einzeln geförderte Kleiderbügel, die nicht mit anderen Kleiderbügeln überkreuzt sind, in der Hauptnut 46 oder 48 weitertransportiert werden, wenn sie sich der zugehörigen Verzweigungsstelle 56 bzw. 62 nähern. Zur Erläuterung dieses Sachverhalts ist in Fig. 2 beispielhaft ein einzelner, überkreuzungsfreier Kleiderbügel 12a eingezeichnet, der in der Hauptnut 48 gefördert wird. Wenn sich dieser Kleiderbügel 12a der Verzweigungsstelle 62 nähert, so passiert er die Verzweigungsstelle 62, ohne die Hauptnut 48 zu verlassen. Entsprechendes gilt selbstverständlich für einen in der Hauptnut 46 geförderten, überkreuzungsfreien Kleiderbügel.

Anders liegt der Sachverhalt bei überkreuzten Kleiderbügeln. Ein Paar solcher überkreuzter Kleiderbügel ist beispielhaft in Fig. 2 eingezeichnet; sie sind dort mit 12b und 12c bezeichnet. Ein Überkreuzungszustand ist dann gegeben, wenn ein Kleiderbügel mit seinem Bügelhaken 20 in eine - bezogen auf die Förderrichtung 16 - vordere Windung des Fördernutsystems 26 eingreift, mit seiner Bügelstange, an der das oder die transportierten Kleidungsstücke hängen, jedoch hinter der Bügelstange eines anderen Kleiderbügels liegt, der mit seinem Bügelhaken in eine hintere Nutwindung des Fördernutsystems 26 eingreift. Nähert sich ein solches Paar überkreuzter Kleiderbügel der Verzweigungsstelle der Hauptnut 46 oder 48, so passiert der vordere Kleiderbügel, also derjenige Kleiderbügel, der mit seinem Bügelhaken 20 in Förderrichtung 16 vorausliegt, die Verzweigungsstelle, ohne die betreffende Hauptnut zu verlassen. Die Zuverlässigkeit, mit der der vorauslaufende zweier überkreuzter Kleiderbügel in der Hauptnut bleibt, ist aufgrund der entgegen der Förderrichtung 16 gerichteten Zugwirkung, die infolge der Überkreuzung auf seinen Bügelhaken 20 ausgeübt wird, sogar noch größer als bei einzelnen, überkreuzungsfreien Kleiderbügeln. Der nachlaufende Kleiderbügel erfährt an seinem Bügelhaken 20 ebenfalls eine Zugwirkung; diese ist jedoch in Förderrichtung 16 gerichtet. Dies hat zur Folge, dass der nachlaufende Kleiderbügel an der Verzweigungsstelle in die von der jeweiligen Hauptnut abzweigende Bypassnut hieingedrängt wird. Die in Fig. 2 eingezeichneten Kleiderbügel 12b, 12c illustrieren diesen Fall. Der nachlaufende Kleiderbügel 12c ist mit seinem Bügelhaken 20 in die Bypassnut 52 eingelaufen. Der vorauslaufende Kleiderbügel 12b befindet sich in Fig. 2 bereits etwas jenseits der Einmündungsstelle 60 (siehe Fig. 3), an der sich die Bypassnut 52 wieder mit der Hauptnut 46 vereinigt. Um dorthin zu gelangen, hat er jedoch die Hauptnut 46 nicht verlassen.

Das Vorhandensein eines Kleiderbügels in einer der Bypassnuten 52, 54 ist demnach ein Indiz für das Vorhandensein überkreuzter Kleiderbügel. Eine induktive Sensoranordnung 68 dient zur Erkennung solcher überkreuzter Kleiderbügel. Die von der Sensoranordnung 68 gelieferten Sensorsignale werden von einer elektronischen Auswerteeinheit 70 ausgewertet und - falls diese das Vorhandensein überkreuzter Kleiderbügel feststellt - in eine geeignete Reaktion umgesetzt. Diese Reaktion kann in einer automatischen Abschaltung des Schneckenförderers 10 bestehen; alternativ oder zusätzlich kann die Auswerteeinheit 70 eine nicht näher dargestellte optische oder/und akustische Warneinrichtung betätigen.

Die Sensoranordnung 68 weist zwei über dem Wellenstück 44 in axialem Abstand voneinander angeordnete Sensoren 72, 74 auf. Position und Abstand der Sensoren 72, 74 sind so gewählt, dass in einer Drehstellung des Wellenstücks 44, in der eine der Bypassnuten 52, 54 genau unter dem - bezogen auf die Förderrichtung 16 - hinteren Sensor 72 vorbeiläuft, zugleich die dieser Bypassnut zugeordnete Hauptnut mit ihrer nächst vorausfolgenden Windung genau unter dem vorderen Sensor 74 vorbeiläuft. Dies ist in Fig. 2 gut zu erkennen. In der dort gezeigten Drehstellung des Wellenstücks 44 befindet sich der hintere Sensor 72 genau über der Bypassnut 52, während sich der vordere Sensor 74 genau über der Hauptnut 46 befindet, und zwar an einer Stelle der Hauptnut 46, die etwas nach der Einmündungsstelle 60 liegt. Wenn bei derartiger Positionierung der Sensoren 72, 74 ein Paar überkreuzter Kleiderbügel das Wellenstück 44 durchläuft, so kommen sie gleichzeitig an den beiden Sensoren 72, 74 vorbei. Die Sensoren 72, 74 geben dementsprechend gleichzeitig ein Sensorsignal an die Auswerteeinheit 70 ab, die daraufhin das Vorhandensein eines Überkreuzungszustand feststellt. Bei einzelnen, überkreuzungsfreien Kleiderbügeln gibt dagegen stets nur einer der Sensoren 72, 74 ein Signal ab.

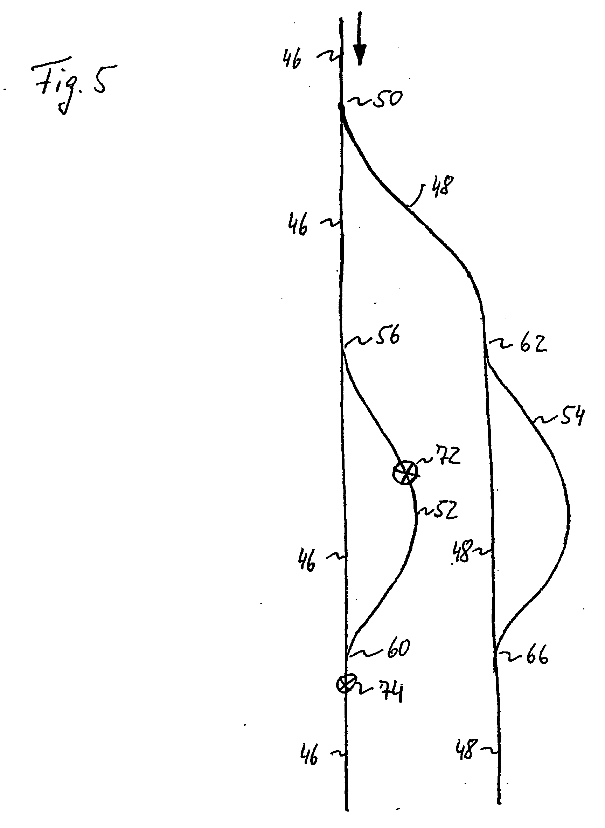

Aus der in Fig. 5 gezeigten Abwicklung der Hauptnuten 46, 48 und der Bypassnuten 52, 54 können die vorstehend erläuterten Zusammenhänge leicht nachvollzogen werden.

## Patentansprüche

1. Schneckenförderer zum Transport von an Hängeträgern (12) hängendem Fördergut, insbesondere an Kleiderbügeln aufgehängten Kleidungsstücken, umfassend einen um seine Wellenachse (24) drehbaren Schneckenwellenstrang (22) mit einem in die Außenoberfläche des Schneckenwellenstrangs (22) eingearbeiteten, sich entlang der Wellenachse (24) schneckenartig um diese windenden Fördernutsystem (26), in das die Hängeträger (12) mit Traghaken (20) einhängbar und darin durch Drehung des Schneckenwellenstrangs (22) axial förderbar sind,
**dadurch gekennzeichnet, dass** das Fördernutsystem (26) mindestens eine primäre Fördernut (46, 48) aufweist, von der an einer Abzweigungsstelle (56, 62) eine - bezogen auf die Förderrichtung (16) des Förderguts entlang der Wellenachse (24) - der primären Fördernut (46, 48) vorauslaufende sekundäre Fördernut (52, 54) abzweigt, wobei die Gestaltung der primären Fördernut (46, 48) und der sekundären Fördernut (52, 54), insbesondere hinsichtlich ihres Steigungsprofils, derart abgestimmt ist, dass überkreuzungsfreie Hängeträger (12), die sich in der primären Fördernut (46, 48) der Abzweigungsstelle (56, 62) nähern, die Abzeigungsstelle (56, 62) ohne Verlassen der primären Fördernut (46, 48) passieren, und dass zur Erkennung überkreuzter Hängeträger (12) dem Schneckenwellenstrang (22) eine Sensoranordnung (68) zugeordnet ist, welche dazu ausgebildet ist, zumindest die sekundäre Fördernut (52, 54) auf darin geförderte Hängeträger (12) zu überwachen.

2. Schneckenförderer nach Anspruch 1,
**dadurch gekennzeichnet, dass** die Sensoranordnung (68) einen ersten Sensor (72) zur Überwachung der sekundären Fördernut (52, 54) sowie einen dem ersten Sensor (72) in Förderrichtung (16) vorausliegend angeordneten zweiten Sensor (74) zur Überwachung der primären Fördernut (46, 48) auf darin geförderte Hängeträger (12) umfasst und dass eine mit beiden Sensoren (72, 74) verbundene Auswerteeinheit (70) ein Überkreuzungserkennungssignal abgibt, wenn beide Sensoren (72, 74) in einem vorgegebenen zeitlichen Zusammenhang zueinander, insbesondere gleichzeitig, einen Hängeträger (12) in der jeweiligen Fördernut (46, 48, 52, 54) detektieren.

3. Schneckenförderer nach Anspruch 1 oder 2,
**dadurch gekennzeichnet, dass** die sekundäre Fördernut (52, 54) im Abstand von der Abzweigungsstelle (56, 62) wieder in die primäre Fördernut (46, 48) einmündet.

4. Schneckenförderer nach Anspruch 3,
**dadurch gekennzeichnet, dass** sich die sekundäre Fördernut (52, 54) zwischen ihrer Abzweigungsstelle (56, 62) von der primären Fördernut (46, 48) und ihrer Einmündungsstelle (60, 66) in die primäre Fördernut (46, 48) annähernd über eine volle Windung erstreckt.

5. Schneckenförderer nach einem der Ansprüche 1 bis 4,
**dadurch gekennzeichnet, dass** das Fördernutsystem (26) eine Mehrzahl von mindestens zwei sich nebeneinander um die Wellenachse (24) windenden primären Fördernuten (46, 48) aufweist, von deren jeder eine sekundäre Fördernut (52, 54) abzweigt, wobei die Sensoranordnung (68) dazu ausgebildet ist, jede der sekundären Fördernuten (52, 54) auf darin geförderte Hängeträger (12) zu überwachen.

6. Schneckenförderer nach Anspruch 5,
**dadurch gekennzeichnet, dass** vor den Abzweigungsstellen (56, 62) der sekundären Fördernuten (52, 54) eine (48) der primären Fördernuten (46, 48) zwischen zwei aufeinander folgenden Windungen einer anderen primären Fördernut (46) entspringt, insbesondere in einem Vereinzelungsabschnitt des Schneckenwellenstrangs (22), in dem die Nutsteigung der anderen primären Fördernut (46) annähernd gleich oder kleiner als die Materialdicke eines Traghakens (20) gemacht ist.

7. Schneckenförderer nach einem der Ansprüche 1 bis 6,
**dadurch gekennzeichnet, dass** die Sensoranordnung (68) als induktive Sensoranordnung ausgeführt ist.

## Claims

1. A screw conveyor for transporting conveyable articles hanging on hanging carriers (12), in particular items of clothing hung on clothes hangers, comprising a screw-shaft line (22) which can be rotated about its shaft axis (24) and has a conveying-groove system (26) which is made in the outer surface of the screw-shaft line (22), winds helically along and around the shaft axis (24), and in which the hanging carriers (12) can be suspended, by way of carrying hooks (20), and can be conveyed axially by rotation of the screw-shaft line (22), **characterized in that** the conveying-groove system (26) has at least one primary conveying groove (46, 48), from which a secondary conveying groove (52, 54), which precedes the primary conveying groove (46, 48) - as seen in the conveying direction (16) of the conveyable articles along the shaft axis (24) - branches off at a branching-off location (56, 62), the configurations of the primary conveying groove (46, 48) and of the secondary conveying groove (52, 54) being coordinated, in particular in respect of the pitch profile thereof, such that crossover-free hanging carriers (12) which approach the branching-off location (56, 62) in the primary conveying groove (46, 48) pass the branching-off location (56, 62) without leaving the primary conveying groove (46, 48), and **in that**, in order to detect crossed-over hanging carriers (12), the screw-shaft line (22) is assigned a sensor arrangement (68) which is designed for monitoring at least the secondary conveying groove (52, 54) for hanging carriers (12) conveyed therein.

2. The screw conveyor as claimed in claim 1, **characterized in that** the sensor arrangement (68) comprises a first sensor (72), for monitoring the secondary conveying groove (52, 54), and a second sensor (74), which is arranged ahead of the first sensor (72) as seen in the conveying direction (16), and is intended for monitoring the primary conveying groove (46, 48) for hanging carriers (12) conveyed therein, and **in that** an evaluation unit (70), which is connected to both sensors (72, 74), emits a crossover-detection signal when the two sensors (72, 74) detect a hanging carrier (12) in the respective conveying grooves (46, 48, 52, 54) in a predetermined time-specific relationship with respect to one another, in particular simultaneously.

3. The screw conveyor as claimed in claim 1 or 2, **characterized in that** the secondary conveying groove (52, 54) opens out into the primary conveying groove (46, 48) again at a distance from the branching-off location (56, 62).

4. The screw conveyor as claimed in claim 3, **characterized in that** the secondary conveying groove (52, 54) extends approximately over a complete turn between its location (56, 62) at which it branches off from the primary conveying groove (46, 48) and its location (60, 66) at which it opens out into the primary conveying groove (46, 48).

5. The screw conveyor as claimed in one of claims 1 to 4, **characterized in that** the conveying-groove system (26) has a plurality of at least two primary conveying grooves (46, 48) which wind around the shaft axis (24) one beside the other and from each of which a secondary conveying groove (52, 54) branches off, the sensor arrangement (68) being designed for monitoring each of the secondary conveying grooves (52, 54) for hanging carriers (12) conveyed therein.

6. The screw conveyor as claimed in claim 5, **characterized in that**, upstream of the branching-off locations (56, 62) of the secondary conveying grooves (52, 54), one (48) of the primary conveying grooves (46, 48) starts between two successive turns of another primary conveying groove (46), in particular in a separating section of the screw-shaft line (22), in which the pitch of the other primary conveying groove (46) is made to be approximately equal to or less than the material thickness of a carrying hook (20).

7. The screw conveyor as claimed in one of claims 1 to 6, **characterized in that** the sensor arrangement (68) is configured as an inductive sensor arrangement.

## Revendications

1. Convoyeur à vis pour le transport d'articles à convoyer suspendus à des supports de suspension (12), en particulier de pièces de vêtements suspendues à des cintres, comprenant une ligne d'arbres de vis (22) pouvant tourner autour de son axe d'arbre (24) avec un système de rainures de transport (26) pratiquées dans la surface extérieure de la ligne d'arbres de vis (22) et s'enroulant à la manière d'une vis sans fin le long de l'axe d'arbre (24) et autour de celui-ci, système dans lequel les supports de suspension (12) peuvent être accrochés avec des crochets de support (20) et transportés axialement à l'intérieur par rotation de la ligne d'arbres de vis (22),
**caractérisé en ce que** le système de rainures de transport (26) comporte au moins une rainure de transport primaire (46, 48) de laquelle, en un emplacement de dérivation (56, 62), part une rainure de transport secondaire (52, 53) précédant - par rapport au sens de transport (16) des articles à transporter le long de l'axe d'arbre (24) - la rainure de transport primaire (46, 48), les formes de la rainure de transport primaire (46, 48) et de la rainure de transport secondaire (52, 53) étant adaptées l'une à l'autre, en particulier en ce qui concerne le profil de leur pas, de manière que des supports de suspension (12) sans croisement, qui s'approchent dans la rainure de transport primaire (46, 48) de l'emplacement de dérivation (56, 62), dépassent l'emplacement de dérivation (56, 62) sans quitter la rainure de transport primaire (46, 48), et **en ce que** pour reconnaître des supports de suspension (12) croisés, il est associé à la ligne d'arbres de vis (22) un dispositif de détection (68) qui est conçu de manière à contrôler au moins la rainure de transport secondaire (52, 53) quant à la présence de supports de suspension (12) transportés à l'intérieur.

2. Convoyeur à vis selon la revendication 1,
**caractérisé en ce que** le dispositif de détection (68) comprend un premier capteur (72) pour surveiller la rainure de transport secondaire (52, 54) ainsi qu'un deuxième capteur (74), disposé à l'avant du premier capteur (72) dans le sens de transport (16), pour surveiller la rainure de transport primaire (46, 48) quant à la présence de supports de suspension (12) transportés à l'intérieur, et **en ce qu'**une unité d'exploitation (70), reliée aux deux capteurs (72, 74), délivre un signal de reconnaissance de croisement lorsque les deux capteurs (72, 74) détectent, dans une relation temporelle réciproque prédéfinie, en particulier simultanément, un support de suspension (12) dans la rainure de transport (46, 48, 52, 54) respective.

3. Convoyeur à vis selon la revendication 1 ou 2,
**caractérisé en ce que** la rainure de transport secondaire (52, 54) débouche à nouveau dans la rainure de transport primaire (46, 48), à distance de l'emplacement de dérivation (56, 62).

4. Convoyeur à vis selon la revendication 3,
**caractérisé en ce que** la rainure de transport secondaire (52, 53) s'étend, entre son emplacement de dérivation (56, 62) de la première rainure de transport primaire (46, 44) et son emplacement d'embouchure (66) dans la rainure de transport primaire (46, 48), approximativement sur une spire complète.

5. Convoyeur à vis selon l'une des revendications 1 à 4,
**caractérisé en ce que** le système de rainures de transport (26) comporte une pluralité d'au moins deux rainures de transport primaires (46, 48), s'enroulant côte à côte autour de l'axe d'arbre (24), de chacune desquelles part une rainure de transport secondaire (52, 54), le dispositif de détection (68) étant conçu de manière à surveiller chacune des rainures de transport secondaires (52, 54) quant à la présence de supports de suspension (12) transportés à l'intérieur de celles-ci.

6. Convoyeur à vis selon la revendication 5,
**caractérisé en ce qu'**en amont des emplacements de dérivation (56, 62) des rainures de transport secondaires (52, 54), part l'une des rainures de transport primaires (46, 48) entre deux spires successives d'une autre rainure de transport primaire (46), en particulier dans un tronçon de séparation de la ligne d'arbres de vis (22), dans lequel le pas de rainure de l'autre rainure de transport primaire (46) est approximativement égal ou inférieur à l'épaisseur de la matière d'un crochet de support (20).

7. Convoyeur à vis selon l'une des revendications 1 à 6,
**caractérisé en ce que** le dispositif de détection (68) est réalisé comme dispositif de détection inductif.
